# EUROPEAN PATENT SPECIFICATION

(11) **EP 0 507 251 B1**
(45) Date of publication and mention of the grant of the patent: **02.12.1998**
(21) Application number: 92105541.4
(22) Date of filing: 31.03.1992
(51) Int. Cl.: G06F 9/38

(54) **Instruction pipelines synchronizing method and pipelined computer implementing the same**
Befehlspipelinesynchronisierungsverfahren und Pipelinerechner unter Verwendung dieses Verfahrens
Procédé de synchronisation des pipelines d'instructions et ordinateur pipeline utilisant celui-ci

(30) Priority: 01.04.1991 JP 68384/91; 18.09.1991 JP 237844/91
(43) Date of publication of application: 07.10.1992
(73) Proprietor: MATSUSHITA ELECTRIC INDUSTRIAL CO., LTD., Kadoma-shi, Osaka-fu, 571 (JP)
(72) Inventor: Yamashita, Hitoshi, Kita-Katsuragi-gun, Nara-ken (JP)
(74) Representative: Grünecker, Kinkeldey, Stockmair & Schwanhäusser Anwaltssozietät

(56) References cited:
- EP-A- 0 106 670
- EP-A- 0 328 721
- EP-A- 0 420 457
- INFORMATION PROCESSING 89 - PROCEEDINGS OF THE IFIP 11TH WORLD COMPUTER CONGRESS 1 September 1989, SAN FRANCISCO, CA, US pages 891 - 896; A. ASTHANA ET AL: 'The Architecture of Massively Parallel Numeric Processor'
- I.E.E.E. TRANSACTIONS ON COMPUTERS vol. 37, no. 5, May 1988, NEW YORK, NY, US pages 562 - 573; J. E. SMITH ET AL: 'Implementing Precise Interrupts in Pipelined Processors'

## Description

### BACKGROUND OF THE INVENTION

The present invention relates to a method for synchronizing the progress of instructions in a plurality of instruction pipelines, and also relates to a pipelined computer implementing the synchronization.

With the advance of LSI high integration technique, there has recently been produced a microprocessor (hereinafter referred to as a MPU) in which an IU (Integer Unit) for processing integer and logical arithmetic instructions and a FPU (Floating-point Processing Unit) for processing floating-point arithmetic instructions are provided. The IU and FPU are pipelined for the high speed processing of instructions.

In the case where the MPU (pipelined computer) executes a program including the integer and logical arithmetic instructions and the floating-point arithmetic instructions, the former and latter instructions are distributed to the IU (first instruction pipeline) and the FPU (second instruction pipeline), respectively. The instructions fed to either of instruction pipelines are executed while sequentially proceeding along a plurality of stages in the instruction pipeline. In view of the high speed execution of instructions, it is preferred that the instructions proceed in both instruction pipelines independently of each other. By way of example, while the FPU processes an instruction, the IU can process a plurality of instructions. More specifically, the order of executing instructions in the both instruction pipelines is sometimes different from that of feeding the same.

In the case where the execution of instructions is suspended when an exception occurs, the contents of a register shared by the both instruction pipelines should be updated according to the execution results of instructions in the order of feeding the instructions. When a preceding instruction in one of the instruction pipelines does not proceed to a store stage (synchronous stage) for updating the register and a succeeding instruction in the other instruction pipeline is about to proceed to a store stage of the latter instruction pipeline, it is necessary to stop the progress of the succeeding instruction. When the preceding instruction proceeds to the store stage, the succeeding instruction can proceed. Thus, it is necessary to synchronize the progress of instructions through the control of the order of executing the instructions in the instruction pipelines. Conventionally, there has not been established a high speed synchronizing method which can be applied to various instruction pipelines operating independently of one another.

There has been invented a novel instruction pipeline synchronizing method disclosed in JP-A-3 206 524, not to be regarded as state of the art according to Art. 54(2) EPC. According to this method, instructions to be processed in a second instruction pipeline are also fed to a first instruction pipeline. The progress of instructions is controlled in the second instruction pipeline through the trace result of movement of the instructions in the first instruction pipeline. For example, in the case where instructions A, B and C are sequentially fed, the instructions A and C are to be processed in the first instruction pipeline and the instruction B is to be processed in the second instruction pipeline, the instruction A is first fed to both instruction pipelines. The instruction A in the first instruction pipeline proceeds and the instruction A in the second instruction pipeline is made invalid. Then, the instruction B is fed to the both instruction pipelines. The instruction B in the second instruction pipeline proceeds and the instruction B in the first instruction pipeline proceeds in parallel as a formal instruction following the instruction A. The progress of the preceding instruction A is grasped through the movement of the instruction B in the first instruction pipeline so as to correspondingly control the progress of the instruction B in the second instruction pipeline.

According to the above-mentioned method, a stage of the first instruction pipeline is occupied by instructions which are not processed in the first instruction pipeline. Consequently, some of stages are wasted in the first instruction pipeline.

It is an object of the present invention to provide a high speed synchronizing method which can be applied to a plurality of instruction pipelines operating independently of one another and in which all the stages of the instruction pipelines can be used without waste, and to provide a pipeline computer implementing the synchronization.

### SUMMARY OF THE INVENTION

To solve the above-mentioned problems, the present invention provides a method as set out in claim 1 for synchronizing the progress of instructions in a plurality of instruction pipelines each of which has a plurality of stages for processing the instructions, wherein one stage of each one of the plurality of the stages is specified as a synchronous stage and the instructions are respectively accompanied by order information on the number of instructions which have not proceeded to the synchronous stages in the instruction pipelines.

More specifically, the method according to the present invention has the following three steps. In a first step, an instruction accompanied by order information on a number which is obtained by adding 1 to the number of instructions which have not proceeded to the synchronous stages in the instruction pipelines is sequentially fed to an instruction pipeline which is successively selected from the instruction pipelines according to the kind of the instruction. In a second step, any instruction in the instruction pipelines is caused to sequentially proceed together with the order information to the next stage independently of the progress of all other instructions in the instruction pipelines except the cases where the progress of a succeeding instruction in any of the instruction pipelines is stopped when it is decided that the succeeding instruction is about to proceed to a stage occupied by a preceding instruction before the preceding instruction proceeds from the occupied stage to the next stage, and where the progress of a succeeding instruction in any of the instruction pipelines is stopped when it is decided that the succeeding instruction is about to proceed to the synchronous stage thereof before a preceding instruction in any other instruction pipelines proceeds to the synchronous stage thereof. In a third step, every time any instruction in the instruction pipelines proceeds to the synchronous stage thereof all the order information which proceeds together with all other instructions in the instruction pipelines is updated so as to advance each number by 1.

According to the above-mentioned method, it is possible to realize a high speed synchronization which can be applied to a plurality of instruction pipelines operating independently of one another. A high speed can also be attained by instruction pipelines synchronizing method in computers which are closely connected. In the case where a high speed arithmetic unit or computer having a plurality of instruction pipelines is realized, great industrial effects can be obtained. In addition, all the stages in the instruction pipelines can be used without waste differently from the prior art. In the case where a succeeding instruction in any of the instruction pipelines is about to proceed to a synchronous stage thereof and a preceding instruction in other instruction pipelines is simultaneously about to proceed to a synchronous stage thereof, the preceding and succeeding instructions can simultaneously proceed to the synchronous stages, respectively. Consequently, efficiency can be enhanced.

In the case where there is an instruction which does not need synchronization, the order information is accompanied by an identification code for distinguishing a synchronous instruction which needs the synchronization from an asynchronous instruction which does not need the synchronization. The progress of a succeeding synchronous instruction in any of the instruction pipelines is stopped when it is decided that the succeeding synchronous instruction is about to proceed to the synchronous stage thereof before a preceding synchronous instruction in any other instruction pipelines proceeds to the synchronous stage thereof.

A pipelined computer according to the present invention as set out in claim 3 is provided with latches for holding the order information correspondingly sent from an initial information generating portion every time an instruction is fed from an instruction decoding portion to any of instruction pipelines so that the order information is caused to proceed together with the instruction.

In the case where there is an instruction which does not need synchronization, the latches are caused to hold identification codes for distinguishing a synchronous instruction which needs the synchronization from an asynchronous instruction which does not need the synchronization together with the order information.

This and other objects, features and advantages of the present invention will become more apparent upon a reading of the following detailed description and drawings.

### BRIEF DESCRIPTION OF THE DRAWINGS

Figure 1 is a block diagram showing the schematic structure of a pipelined computer according to a first embodiment of the present invention;
Figure 2 is a block diagram showing the schematic structure of a pipelined computer according to a second embodiment of the present invention;
Figure 3 is a block diagram showing the general structure of a pipelined computer according to a third embodiment of the present invention;
Figure 4 is a circuit diagram showing the detailed structure of an input selector for an A2 stage of a first instruction pipeline shown in Figure 3 and a logical circuit for controlling the input selector;
Figure 5 is a circuit diagram showing the detailed structure of an input selector for a B2 stage of the first instruction pipeline shown in Figure 3 and a logical circuit for controlling the input selector;
Figure 6 is a circuit diagram showing the detailed structure of an input selector for a C2 stage of the first instruction pipeline shown in Figure 3 and a logical circuit for controlling the input selector;
Figure 7 is a circuit diagram showing the detailed structure of an initial information generating portion shown in Figure 3;
Figure 8 is a circuit diagram showing the detailed structure of a flag generating circuit for the A2 stage of the first instruction pipeline shown in Figure 3;
Figure 9 is a circuit diagram showing the detailed structure of a flag generating circuit for the B2 stage of the first instruction pipeline shown in Figure 3;
Figure 10 is a diagram showing a half portion of a timing chart which illustrates the operation of the pipelined computer shown in Figure 3;
Figure 11 is a diagram showing the other half portion of the timing chart which illustrates the operation of the pipelined computer shown in Figure 3;
Figure 12 is a block diagram showing the general structure of a pipelined computer according to a fourth embodiment of the present invention;
Figure 13 is a circuit diagram showing the detailed structure of an initial information generating portion shown in Figure 12;
Figure 14 is a circuit diagram showing the detailed structure of a flag generating circuit for an A2 stage of a first instruction pipeline shown in Figure 12; and
Figure 15 is a circuit diagram showing the detailed structure of a flag generating circuit for a B2 stage of the first instruction pipeline shown in Figure 12.

### DETAILED DESCRIPTION OF THE PREFERRED EMBODIMENTS

Preferred embodiments of the present invention will be described with reference to the drawings.

### (First Embodiment)

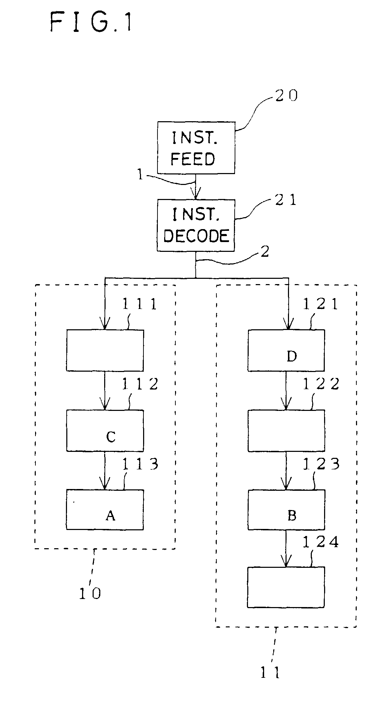

Fig. 1 is a block diagram according to a first embodiment of the present invention. A pipelined computer shown in Fig. 1 comprises two instruction pipelines 10 and 11, an instruction feeding portion 20, and an instruction decoding portion 21. A first instruction pipeline 10 includes first to third stages 111 to 113. A second instruction pipeline 11 includes first to fourth stages 121 to 124. The stages of the first and second instruction pipelines 10 and 11 have means for holding information on the numbers of instructions which proceed in the stages and are processed in both pipelines and on the necessity of synchronizing the instruction with the preceding and succeeding instructions.

An instruction 1 fed from the instruction feeding portion 20 is decoded by the instruction decoding portion 21. On the basis of the result of decoding, an instruction 2 is fed to the instruction pipeline 10 or 11 which should process the same. It is supposed that instructions A, B, C and D are sequentially fed from the instruction feeding portion 20, the instructions A and C are executed in the first instruction pipeline 10 and the instructions B and D are executed in the second instruction pipeline 11, the instructions A, B and C are synchronous instructions to be synchronized with the preceding and succeeding instructions, and the instruction D is an asynchronous instruction which does not need to be synchronized. Furthermore, it is supposed that the third stage 113 of the first instruction pipeline 10 and the fourth stage 124 of the second instruction pipeline 11 are specified as synchronous stages.

When it is decided that the instruction A fed to the instruction decoding portion 21 is to be executed in the first instruction pipeline 10, the instruction A is fetched in the first instruction pipeline 10 and starts to proceed in the first instruction pipeline 10 while holding information that it is firstly processed in both instruction pipelines. Then, it is decided whether the instruction B fed to the instruction decoding portion 21 should be processed in any of the instruction pipelines in similar to the instruction A. The instruction B is fetched in the second instruction pipeline 11 and starts to proceed in the second instruction pipeline 11 while holding information that it is secondly processed in the both instruction pipelines. At this time, the instruction A independently proceeds in the first instruction pipeline 10. Thereafter, the instruction C is fed to and decoded by the instruction decoding portion 21. If possible (i.e., in the case where the instruction A proceeds to the second stage 112 or therebeyond), the instruction C is fetched in the first instruction pipeline 10 and starts to proceed while holding information that it is thirdly processed in the both instruction pipelines. At this time, the instructions A and B independently proceed in the first and second instruction pipelines 10 and 11, respectively. Subsequently, the instruction D is fed to and decoded by the instruction decoding portion 21. If possible (i.e., in the case where the instruction B proceeds to the second stage 122 or therebeyond), the instruction D is fetched in the second instruction pipeline 11 and starts to proceed while holding information that it is fourthly processed in the both instruction pipelines. At this time, the instructions A and C independently proceed in the first instruction pipeline 10, and the instruction B independently proceeds in the second instruction pipeline 11.

It is supposed that the instructions A, B, C and D proceed in the instruction pipelines 10 and 11 in a state shown in Fig. 1. The instruction A has proceeded to the third stage 113 which is specified as a synchronous stage. Consequently, the instruction B is processed in both instruction pipelines while holding information that it is a first one which does not proceed to the synchronous stage. The instructions C and D are processed while holding information that they are second and third ones, respectively. In the case where the instruction A terminates processing in the third stage 113 and then goes out of the first instruction pipeline 10, the instruction C remains in the second stage 112 even if processing is terminated in the second stage 112. The reason is that the instruction C is a second one which does not proceed to the synchronous stage so that it cannot proceed to the third stage 113. Only in the case where the instruction B the information of which is updated that it is a first one has terminated processing in the third stage 123 of the second instruction pipeline 11 and has proceeded to the fourth stage 124 specified as a synchronous stage or is about to proceed to the fourth stage 124, the instruction C can proceed to the third stage 113. When the instruction B terminates processing in the third stage 123 of the second instruction pipeline 11 and then proceeds to the fourth stage 124, the instruction C proceeds to the third stage 113 for processing. The instruction D independently proceeds following the instruction B.

According to the method of the present embodiment, the instructions in the instruction pipelines 10 and 11 are caused to sequentially proceed to the next stage independently of the progress of other instructions while holding order information so that instruction progress can be synchronized between the instruction pipelines 10 and 11, apart from the following cases. More specifically, in the cases where it is decided that a succeeding instruction is about to proceed to a stage occupied by a preceding instruction before the preceding instruction proceeds from the occupied stage to the next stage, and where it is decided that a succeeding instruction in either of the instruction pipelines 10 and 11 is about to proceed to the synchronous stage thereof before a preceding instruction in the other instruction pipeline proceeds to the synchronous stage thereof, the succeeding instruction is caused to stop proceeding.

### (Second Embodiment)

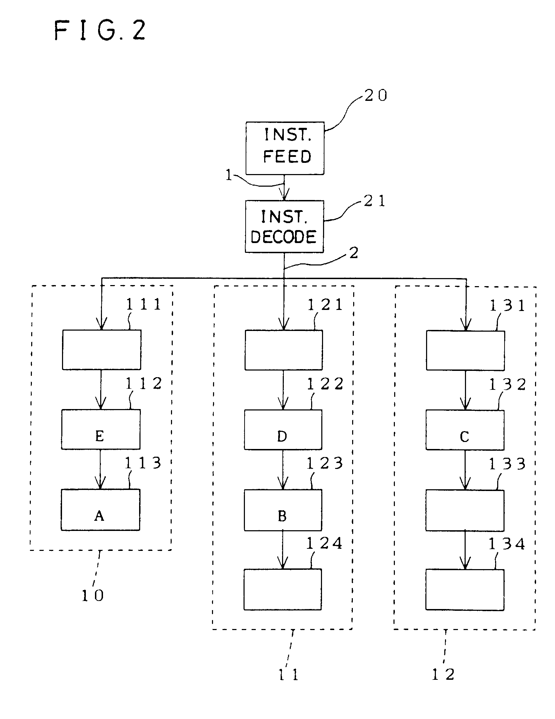

Also in a pipeline computer having three or more instruction pipelines, there can be realized the same synchronizing method. Fig. 2 is a block diagram showing a pipelined computer having three instruction pipelines according to a second embodiment of the present invention.

A pipelined computer shown in Fig. 2 comprises three instruction pipelines 10, 11 and 12, an instruction feeding portion 20, and an instruction decoding portion 21. A first instruction pipeline 10 includes first to third stages 111 to 113. A second instruction pipeline 11 includes first to fourth stages 121 to 124. A third instruction pipeline 12 includes first to fourth stages 131 to 134. The stages of the first, second and third instruction pipelines 10, 11 and 12 have means for holding information on the numbers of instructions which proceed in the stages and are processed in the three instruction pipelines and on the necessity of synchronizing the instruction with the preceding and succeeding instructions.

An instruction 1 fed from the instruction feeding portion 20 is decoded by the instruction decoding portion 21. On the basis of the result of decoding, an instruction 2 is fed to the instruction pipeline 10, 11 or 12 which should process the same. It is supposed that instructions A, B, C, D and E are sequentially fed, the instructions A and E are executed in the first instruction pipeline 10 and the instructions B and D are executed in the second instruction pipeline 11, the instruction C is executed in the third instruction pipeline 12, the instructions A, B, C and E are synchronous instructions to be synchronized with the preceding and succeeding instructions, and the instruction D is an asynchronous instruction which does not need to be synchronized. Furthermore, it is supposed that the third stage 113 of the first instruction pipeline 10, the fourth stage 124 of the second instruction pipeline 11 and the third stage 133 of the third instruction pipeline 12 are specified as synchronous stages.

When it is decided that the instruction A fed to the instruction decoding portion 21 is to be executed in the first instruction pipeline 10, the instruction A is fetched in the first instruction pipeline 10 and starts to proceed in the first instruction pipeline 10 while holding information that it is firstly processed in the three instruction pipelines. Then, it is decided whether the instruction B fed to the instruction decoding portion 21 should be processed in any of the instruction pipelines in similar to the instruction A. The instruction B is fetched in the second instruction pipeline 11 and starts to proceed in the second instruction pipeline 11 while holding information that it is secondly processed in the three instruction pipelines. At this time, the instruction A independently proceeds in the first instruction pipeline 10. Thereafter, it is decided whether the instruction C fed to the instruction decoding portion 21 should be processed in any of the instruction pipelines. The instruction C is fetched in the third instruction pipeline 12 and starts to proceed in the third instruction pipeline 12 while holding information that it is thirdly processed in the three instruction pipelines. At this time, the instructions A and B independently proceed in the first and second instruction pipelines 10 and 11, respectively. Subsequently, the instruction D is fed to and decoded by the instruction decoding portion 21. If possible (i.e., in the case where the instruction B proceeds to the second stage 122 or therebeyond), the instruction D is fetched in the second instruction pipeline 11 and starts to proceed while holding information that it is fourthly processed in the three instruction pipelines. At this time, the instructions A, B and C independently proceed in the first, second and third instruction pipelines 10, 11 and 12, respectively. Furthermore, the instruction E is fed to and decoded by the instruction decoding portion 21. If possible (i.e., in the case where the instruction A proceeds to the second stage 112 or therebeyond), the instruction E is fetched in the first instruction pipeline 10 and starts to proceed while holding information that it is fifthly processed in the three instruction pipelines. At this time, the instructions A, B and D, and C independently proceed in the first, second and third instruction pipelines 10, 11 and 12, respectively.

It is supposed that the instructions A, B, C, D and E proceed in the instruction pipelines 10, 11 and 12 in a state shown in Fig. 2. The instruction A has proceeded to the third stage 113 which is specified as a synchronous stage. Consequently, the instruction B is processed in the three instruction pipelines while holding information that it is a first one which does not proceed to the synchronous stage. The instructions C, D and E are processed while holding information that they are second, third and fourth ones, respectively. In the case where the instruction A terminates processing in the third stage 113 and then goes out of the first instruction pipeline 10, the instruction E remains in the second stage 112 even if processing is terminated in the second stage 112. The reason is that the instruction E is a fourth one which does not proceed to the synchronous stage (a third one which needs to be synchronized) so that it cannot proceed to the third stage 113. Only in the cases where the instruction B the information of which is updated that it is a first one has terminated processing in the third stage 123 of the second instruction pipeline 11 and has proceeded to the fourth stage 124 specified as a synchronous stage or is about to proceed to the fourth stage 124, and where the instruction C the information of which is updated that it is a second one has terminated processing in the second stage 132 of the third instruction pipeline 12 and has proceeded to the third stage 133 specified as the synchronous stage or is about to proceed to the fourth stage 134, the instruction E can proceed to the third stage 113. In this case, since the instruction D is an asynchronous instruction differently from the instructions B and C, it is not a stop condition for the instruction E. When the instruction B terminates processing in the third stage 123 of the second instruction pipeline 11 and then proceeds to the fourth stage 124, the instruction C can proceed to the third stage 133 of the third instruction pipeline 12. When the instruction C proceeds to the third stage 133, the instruction E can proceed to the third stage 113 of the first instruction pipeline 10. The instruction D independently proceeds following the instruction B.

### (Third Embodiment)

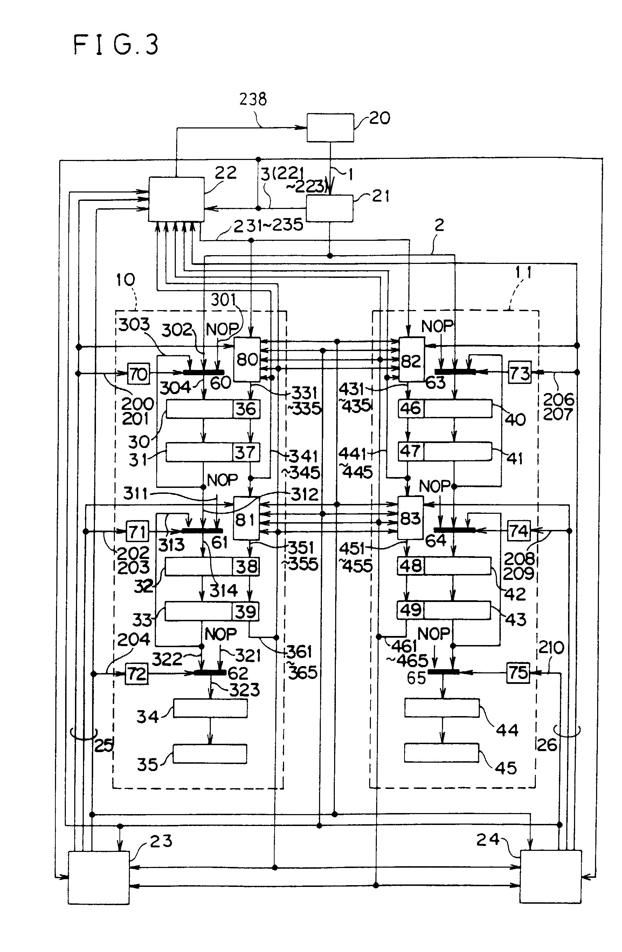

There will be described the specific example of a pipelined computer having two instruction pipelines with reference to Figs. 3 to 11.

For simplicity, each instruction occupies a stage in the embodiments shown in Figs. 1 and 2. In the following embodiments, the respective stages of instruction pipelines are driven by two-phase clocks. A pipeline stage is formed by pairing two substages.

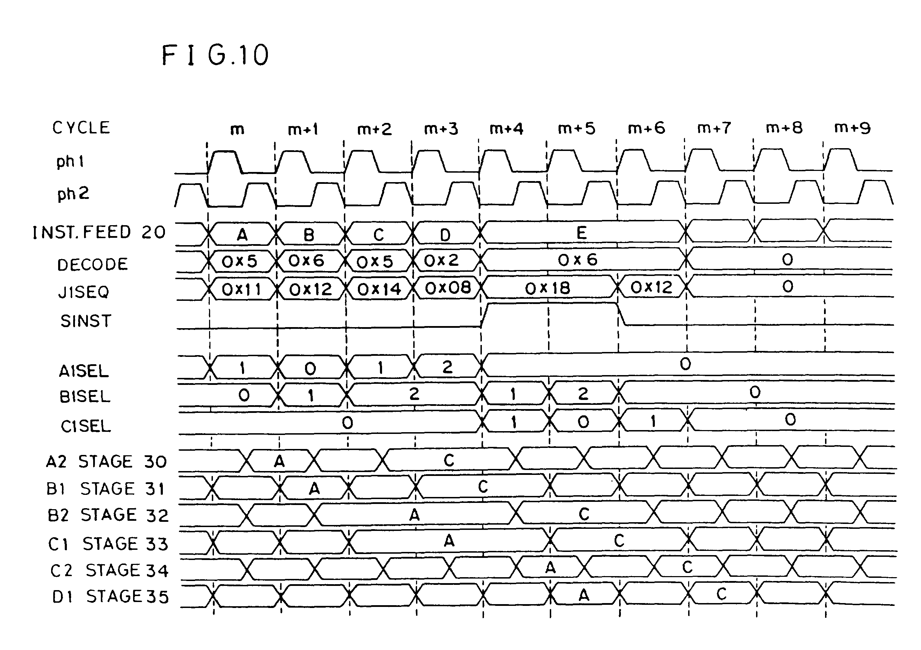

A first instruction pipeline 10 shown in Fig. 3 includes a first stage having an A2 stage 30 and a B1 stage 31, a second stage having a B2 stage 32 and a C1 stage 33, and a third stage having a C2 stage 34 and a D1 stage 35. A second instruction pipeline 11 includes a first stage having an S2 stage 40 and a T1 stage 41, a second stage having a T2 stage 42 and a U1 stage 43, and a third stage having a U2 stage 44 and a V1 stage 45. The respective stages are driven by two-phase clocks ph1 and ph2 as shown in Fig. 10. The B1 stage 31, C1 stage 33 and D1 stage 35 of the first instruction pipeline 10, and the T1 stage 41, U1 stage 43 and V1 stage 45 of the second instruction pipeline 11 are formed by latches which are driven by the clock ph1. Other stages are formed by latches driven by the clock ph2. The C2 stage 34 of the first instruction pipeline 10 and the U2 stage 44 of the second instruction pipeline 11 are specified as synchronous stages.

An instruction 1 fed from an instruction feeding portion 20 is decoded by an instruction decoding portion 21. A decoded instruction 2 is fed to either of the instruction pipelines 10 and 11. Information 3 on the decoded instruction is inputted to an initial information generating portion 22. Information 231 to 235 generated by the initial information generating portion 22 are fed to either of the instruction pipelines 10 and 11. The progress of the instruction 2 in the first and second instruction pipelines 10 and 11 is controlled by first and second instruction pipeline control portions 23 and 24.

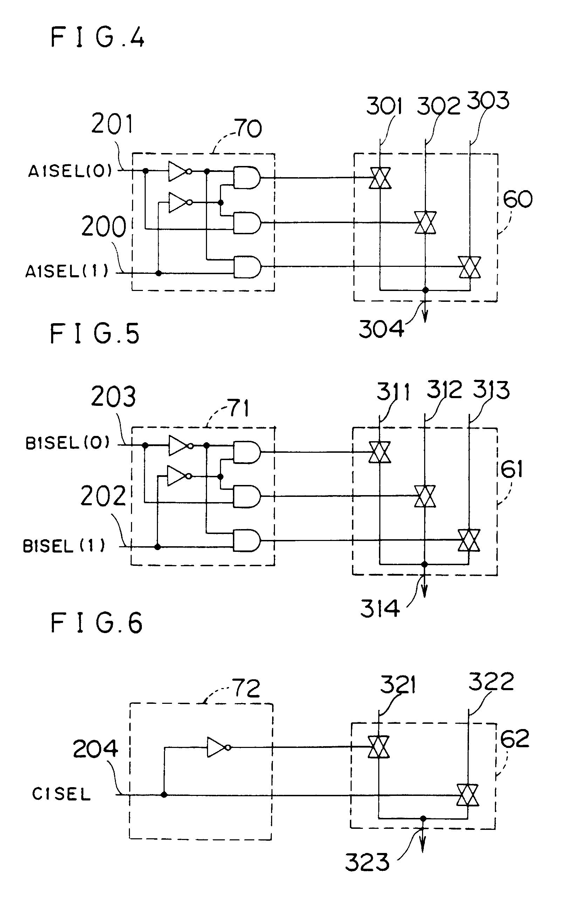

When input selectors 60 to 62 for the A2, B2 and C2 stages 30, 32 and 34 are operated by instruction pipeline control signals 25 (A1SEL, B1SEL and C1SEL) generated by the first instruction pipeline control portion 23, the progress of instructions in the first instruction pipeline 10 is controlled. Figs. 4 to 7 show the circuit structures of the input selectors 60 to 62 together with logical circuits 70 to 72 for controlling the same. The A1SEL is a signal on signal lines A1SEL [1] and A1SEL [0]. The B1SEL is a signal on signal lines B1SEL [1] and B1SEL [0].

In Fig. 4, the reference numerals 200 and 201 denote the signal lines A1SEL [1] and A1SEL [0], respectively. The reference numerals 301 to 304 correspond to a NOP (no operation) instruction, an instruction 2 fed from the instruction decoding portion 21, a feedback instruction fed from the B1 stage 31, and an instruction sent to the A2 stage 30, respectively. In Fig. 5, the reference numerals 202 and 203 denote the signal lines B1SEL [1] and B1SEL [0], respectively. The reference numerals 311 to 314 correspond to a NOP instruction, an instruction fed from the B1 stage 31, a feedback instruction fed from the C1 stage 33, and an instruction sent to the B2 stage 32, respectively. In Fig. 6, the reference numeral 204 denotes a signal line C1SEL. The reference numerals 321 to 323 correspond to a NOP instruction, an instruction fed from the C1 stage 33, and an instruction sent to the C2 stage 34, respectively. Figs. 4 to 6 show switching circuits for 1-bit signals. These switching circuits are arranged in parallel according to the bit width of each stage.

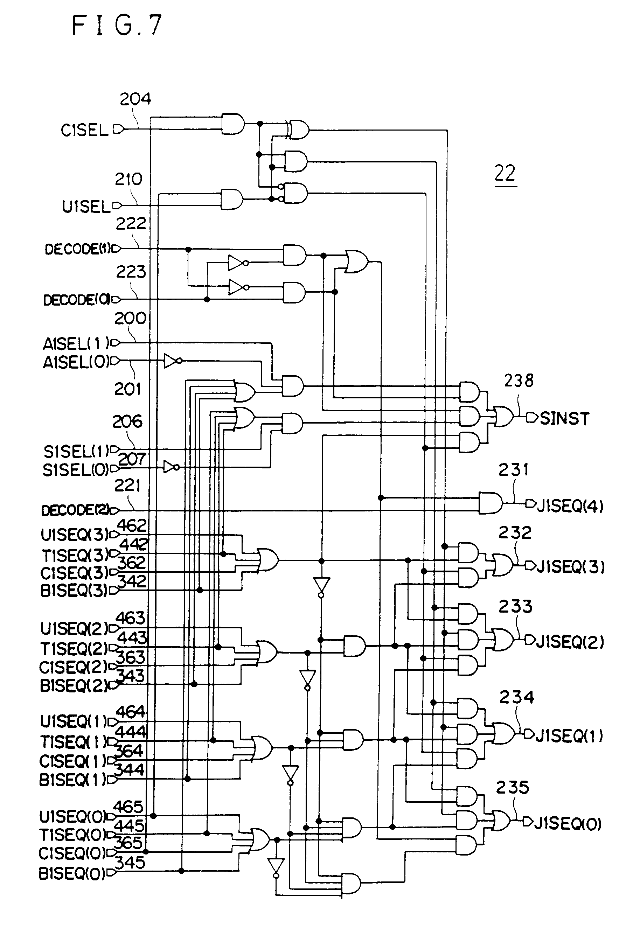

An input selector 63 and a logical circuit 73 in the S2 stage 40 of the second instruction pipeline 11 have the same structures as those of the input selector 60 and the logical circuit 70 in the A2 stage 30 of the first instruction pipeline 10 (Fig. 5). An input selector 64 and a logical circuit 74 in the T2 stage 42 of the second instruction pipeline 11 have the same structures as those of the input selector 61 and the logical circuit 71 in the B2 stage 32 of the first instruction pipeline 10 (Fig. 6). An input selector 65 and a logical circuit 75 in the U2 stage 44 of the second instruction pipeline 11 have the same structures as those of the input selector 62 and the logical circuit 72 in the C2 stage 34 of the first instruction pipeline 10 (Fig. 7).

Table 1 shows the relationship between the instruction pipeline control signal 25 fed to the first instruction pipeline 10 and the progress of instructions in the first instruction pipeline 10.

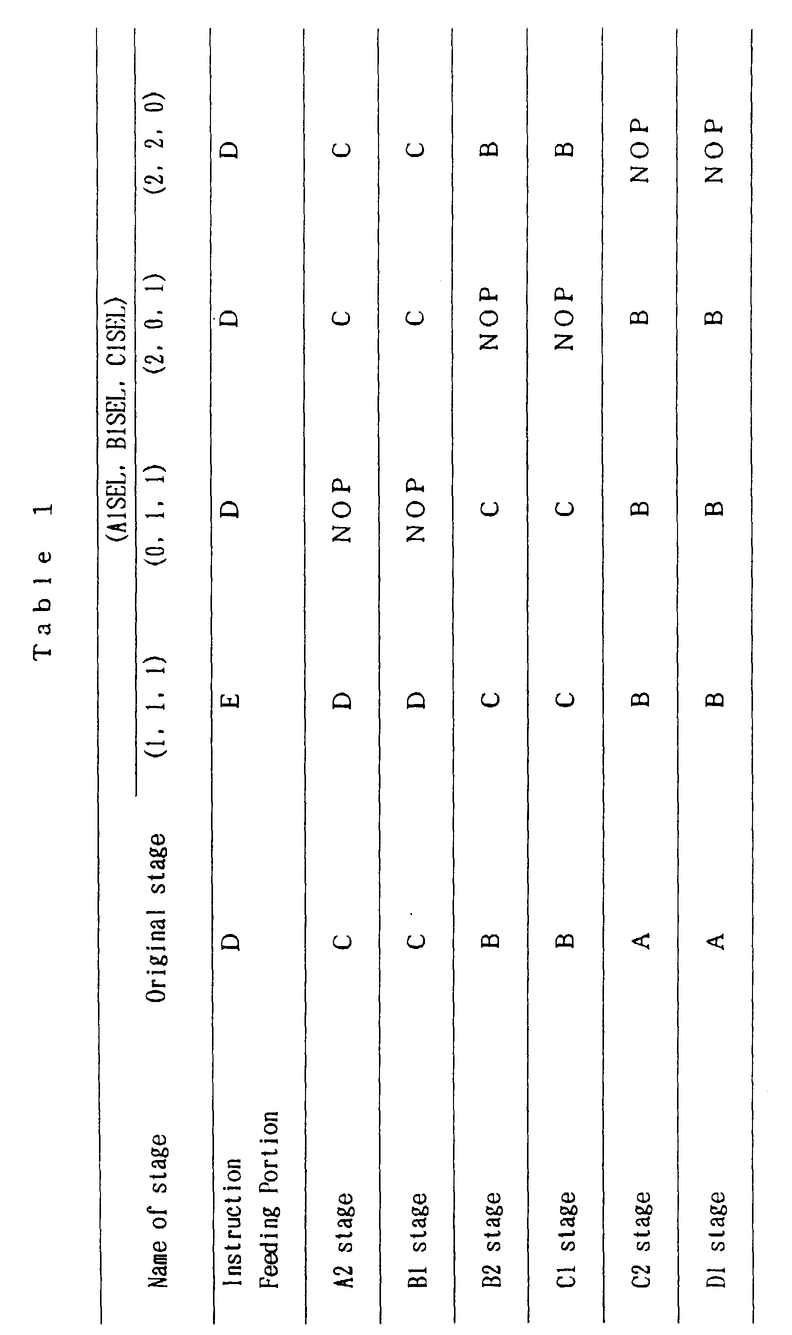

In an original state, it is supposed that an instruction D exists in the instruction feeding portion 20, an instruction C exists in the A2 and B1 stages 30 and 31 as the first stages, an instruction B exists in the B2 and C1 stages 32 and 33 as the second stages, and an instruction A exists in the C2 and D1 stages 34 and 35 as the third stages. First instruction pipeline control signals 25 are represented by (A1SEL, B1SEL, C1SEL).
(1) In case of (1, 1, 1), an instruction of each stage proceeds by 2 substages and a new instruction E occurs in the instruction feeding portion 20.
(2) In case of (0, 1, 1), the instruction D of the instruction feeding portion 20 does not move. The instruction C proceeds to the B2 and C1 stages 32 and 33, and the instruction B proceeds to the C2 and D1 stages 34 and 35. In this case, a NOP instruction is inserted in the A2 and B1 stages 30 and 31.
(3) In case of (2, 0, 1), the instruction D of the instruction feeding portion 20 and the instruction C of the A2 and B1 stages 30 and 31 do not move. The instruction B proceeds to the C2 and D1 stages 34 and 35. In this case, the NOP instruction is inserted in the B2 and C1 stages 32 and 33.
(4) In case of (2, 2, 0), the instructions D, C and B do not move. The instruction A goes out of the first instruction pipeline 10. In this case, the NOP instruction is inserted in the C2 and D1 stages 34 and 35.

When the input selectors 63 to 65 provided in the S2, T2 and U2 stages 40, 42 and 44 are operated by control signals 26 (S1SEL, T1SEL, U1SEL) generated by the second instruction pipeline control portion 24, the progress of instructions in the second instruction pipeline 11 is controlled in the same manner as in the first instruction pipeline 10.

An initial information generating portion 22 is provided in order to add information to the instruction 2 fed to the first and second instruction pipelines 10 and 11. In the first instruction pipeline 10 are provided flag generating circuits 80 and 81, and latches 36 to 39 for holding 5-bit information in the A2 stage 30 to the C1 stage 33. In the second instruction pipeline 11 are provided flag generating circuits 82 and 83, and latches 46 to 49 for holding 5-bit information in the S2 stage 40 to the U1 stage 43. In the instruction pipelines 10 and 11, the flag generating circuits and the latches have the same structures, respectively.

Fig. 7 is a circuit diagram showing the initial information generating portion 22. In Fig. 7, the reference numerals 200, 201 and 204 denote A1SEL [1], A1SEL [0] and C1SEL which are parts of the first instruction pipeline control signals 25. The reference numerals 206, 207 and 210 denote S1SEL [1], S1SEL [0] and U1SEL which are parts of the second instruction pipeline control signals 26. The reference numerals 221 to 223 denote 3-bit information DECODE [2] to DECODE [0] as information 3 on instructions decoded by the instruction decoding portion 21. A most significant bit DECODE [2] indicates the necessity of synchronizing an instruction pipeline for performing processing with the other instruction pipeline (in case of "1", synchronization is needed). Low order 2 bits of DECODE [1] and DECODE [0] indicate that processing is performed in neither of the instruction pipelines if "00(0x0)", processing is performed in the first instruction pipeline 10 if "01(0x1)", and processing is performed in the second instruction pipeline 11 if "10(0x2)". As will be described below, "0x" indicates hexadecimal number representation. The reference numerals 342 to 345 denote B1SEQ [3] to B1SEQ [0] which are parts of values of the latch 37 in the B1 stage 31. The reference numerals 362 to 365 denote C1SEQ [3] to C1SEQ [0] which are parts of values of the latch 39 in the C1 stage 33. The reference numerals 442 to 445 denote T1SEQ [3] to T1SEQ [0] which are parts of values of the latch 47 in the T1 stage 41. The reference numerals 462 to 465 denote U1SEQ [3] to U1SEQ [0] which are parts of values of the latch 49 in the U1 stage 43.

Assuming that the above-mentioned signals are inputs, the initial information generating portion 22 shown in Fig. 7 determines J1SEQ [4] to J1SEQ [0] (231 to 235) according to the movement of instructions in the first and second instruction pipelines 10 and 11, and information fed from the instruction feeding portion 20 and decoded by the instruction decoding portion 21. The J1SEQ [4] to J1SEQ [0] are values of the latch 36 in the A2 stage 30 or of the latch 46 in the S2 stage 40. The reference numeral 238 denotes SINST for requiring the instruction feeding portion 20 to stop instruction feeding.

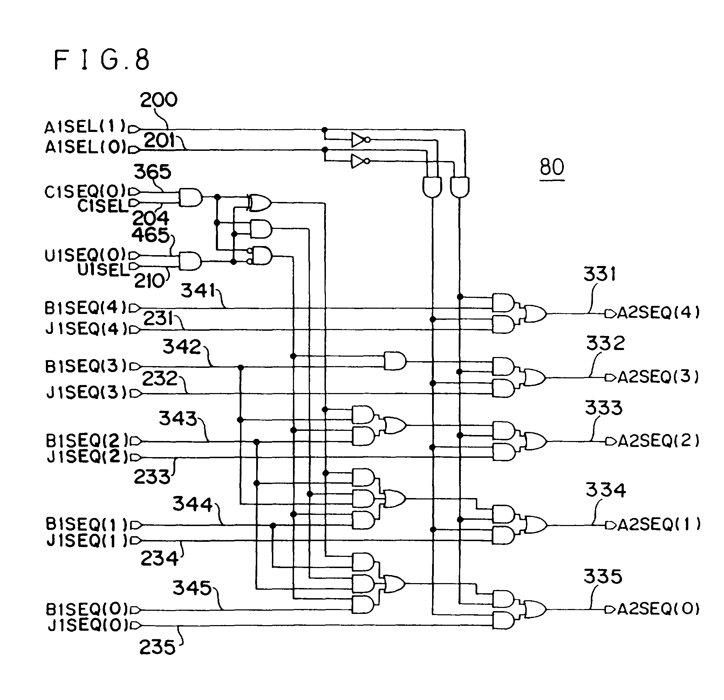

Fig. 8 is a circuit diagram of the flag generating circuit 80 for the A2 stage 30. In Fig. 8, the reference numerals 200, 201 and 204 denote A1SEL [1], A1SEL [0] and C1SEL which are parts of the first instruction pipeline control signals 25. The reference numeral 210 denotes U1SEL which is a part of the second instruction pipeline control signal 26. The reference numerals 231 to 235 denote J1SEQ [4] to J1SEQ [0] outputted from the initial information generating portion 22. The reference numerals 341 to 345 denote B1SEQ [4] to B1SEQ [0] which are values of the latch 37 in the B1 stage 31. The reference numeral 365 denotes C1SEQ [0] which is a part of a value of the latch 39 in the C1 stage 33. The reference numeral 465 denotes U1SEQ [0] which is a part of a value of the latch 49 in the U1 stage 43. Assuming that the above-mentioned signals are inputs, the flag generating circuit 80 shown in Fig. 8 determines A2SEQ [4] to A2SEQ [0] (331 to 335) according to the movement of instructions in the first and second instruction pipelines 10 and 11. The A2SEQ [4] to A2SEQ [0] are values of the latch 36 in the A2 stage 30. The flag generating circuit 82 for the S2 stage 40 in the second instruction pipeline 11 has the same structure as that of the flag generating circuit 80. A value of the latch 36 in the A2 stage 30 is inputted to the latch 37 in the B1 stage 31 as it is. A value of the latch 46 in the S2 stage 40 is inputted to the latch 47 in the T1 stage 41 as it is.

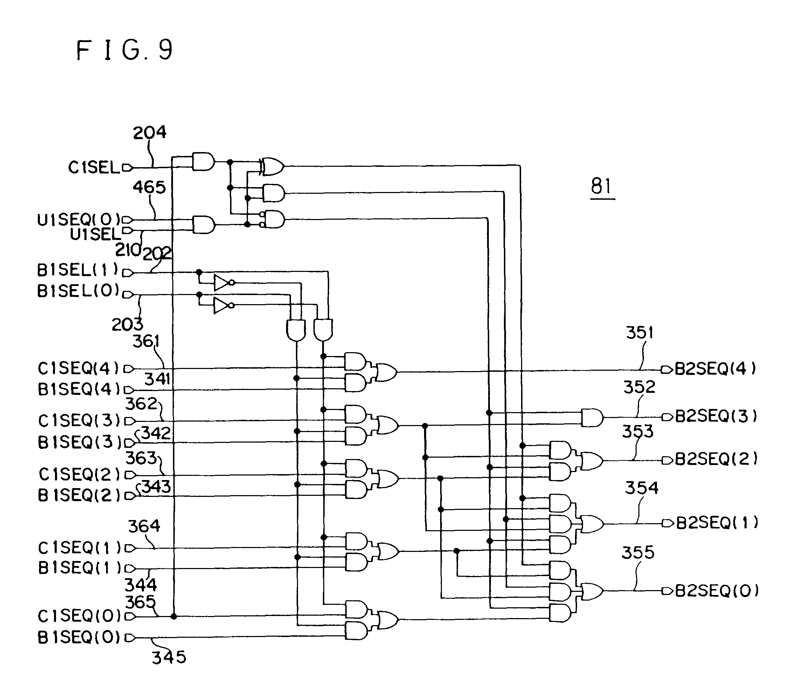

Fig. 9 is a circuit diagram of the flag generating circuit 81 for the B2 stage 32. In Fig. 9, the reference numerals 202 to 204 denote B1SEL [1], B1SEL [0] and C1SEL which are parts of the first instruction pipeline control signals 25. The reference numeral 210 denotes U1SEL which is a part of the second instruction pipeline control signal 26. The reference numerals 341 to 345 denote B1SEQ [4] to B1SEQ [0] which are values of the latch 37 in the B1 stage 31. The reference numerals 361 to 365 denote C1SEQ [4] to C1SEQ [0] which are values of the latch 39 in the C1 stage 33. The reference numeral 465 denotes U1SEQ [0] which is a part of a value of the latch 49 in the U1 stage 43. Assuming that the above-mentioned signals are inputs, the flag generating circuit 81 shown in Fig. 9 determines B2SEQ [4] to B2SEQ [0] (351 to 355) according to the movement of instructions in the first and second instruction pipelines 10 and 11. The B2SEQ [4] to B2SEQ [0] are values of the latch 38 in the B2 stage 32. The flag generating circuit 83 for the T2 stage 42 in the second instruction pipeline 11 has the same structure as that of the flag generating circuit 81. A value of the latch 38 in the B2 stage 32 is inputted to the latch 39 in the C1 stage 33 as it is. A value of the latch 48 in the T2 stage 42 is inputted to the latch 49 in the U1 stage 43 as it is.

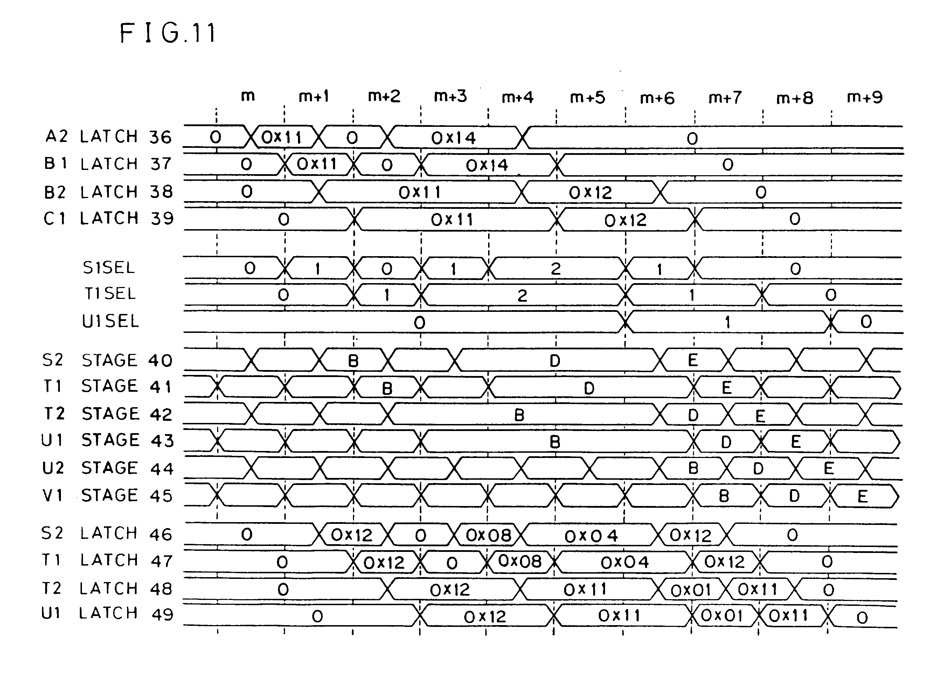

With reference to timing charts shown in Figs. 10 and 11, there will be described the operation of a pipelined computer having the above-mentioned structure. In the case where instructions are processed, synchronization is performed in the C2 stage 34 of the first instruction pipeline 10 and the U2 stage 44 of the second instruction pipeline 11.

In Figs. 10 and 11, an instruction A occurs in the instruction feeding portion 20 at the mth cycle. In the former half of the mth cycle, the instruction A is decoded by the instruction decoding portion 21. Information 3 on the instruction A, i.e., DECODE [2] to DECODE [0] have a value of "101(0x5)". In view of the value of DECODE and the status of both instruction pipelines, the initial information generating portion 22 generates values of 5-bit information J1SEQ to be added when the decoded instruction A is fed to the first instruction pipeline 10. In this case, a value of J1SEQ is "10001(0x11)".

There will be described the values of information J1SEQ [4] to J1SEQ [0] to be added to instructions. A most significant bit J1SEQ [4] indicates the necessity of synchronizing an instruction pipeline for performing processing and the other instruction pipeline. If the bit J1SEQ [4] is "1", synchronization is needed. If the bit J1SEQ [4] is "0", the synchronization is not needed. Low order 4 bits of J1SEQ [3] to J1SEQ [0] indicate the order of feeding from the instruction feeding portion 20 instructions processed in the instruction pipelines 10 and 11. The J1SEQ [3] to J1SEQ [0] have values of "0001(0x1)", "0010(0x2)", "0100(0x4)" and "1000(0x8)" in the feeding order. Consequently, it is decided that the instruction A should be synchronized in the instruction pipelines 10 and 11 and is (or is being) firstly executed in the instruction pipelines 10 and 11. As described above, when the value of DECODE is "101(0x5)", the instruction A needs to be synchronized in the instruction pipelines 10 and 11, and is processed in the first instruction pipeline 10.

In the latter half of the mth cycle, the A1SEL which is a part of the first instruction pipeline control signal 25 is 1. In the first instruction pipeline 10, consequently, the instruction A proceeds to the A2 stage 30 through the input selector 60, and the value "10001(0x11)" of the J1SEQ generated by the initial information generating portion 22 proceeds to the latch 36 in the A2 stage 30 through the flag generating circuit 80. In the second instruction pipeline 11, the S1SEL which is a part of the second instruction pipeline control signal 26 is 0. Consequently, the NOP instruction proceeds to the S2 stage 40 through the input selector 63, and the value "0" proceeds to the latch 46 in the S2 stage 40 through the flag generating circuit 82. At this time, the A1SEL and S1SEL are controlled by the first and second instruction pipeline control portions 23 and 24 according to the information 3 (DECODE) decoded by the instruction decoding portion 21.

In the former half of the (m + 1)th cycle, the instruction A proceeds from the A2 stage 30 to the B1 stage 31 of the first instruction pipeline 10, and the value of the latch 36 in the A2 stage 30 proceeds to the latch 37 in the B1 stage 31 as it is. The instruction B occurs in the instruction feeding portion 20 and is decoded by the instruction decoding portion 21. Consequently, the value of DECODE, which is the information 3 on the instruction B, becomes "110(0x6)". At the same time, a value "10010(0x12)" of J1SEQ is generated by the initial information generating portion 22 according to the value of DECODE and the status of the both instruction pipelines.

In the latter half of the (m + 1)th cycle, A1SEL is 0 and B1SEL is 1. Consequently, the instruction A proceeds to the B2 stage 32 of the first instruction pipeline 10. A value "10001(0x11)" of the latch 37 in the B1 stage 31 proceeds to the latch 38 in the B2 stage 32 as it is. The NOP instruction proceeds to the A2 stage 30 of the first instruction pipeline 10. The value "0" proceeds to the latch 36 in the A2 stage 30. At the same time, S1SEL is 1 so that the instruction B proceeds to the S2 stage 40 of the second instruction pipeline 11 according to the decoded information. The value "10010(0x12)" of J1SEQ generated by the initial information generating portion 22 proceeds to the latch 46 in the S2 stage 40.

In the former half of the (m + 2)th cycle, the instruction A proceeds from the B2 stage 32 to the C1 stage 33 of the first instruction pipeline 10, the value "10001(0x11)" of the latch 38 in the B2 stage 32 proceeds to the latch 39 in the C1 stage 33 as it is, the instruction B proceeds from the S2 stage 40 to the T1 stage 41 of the second instruction pipeline 11, and the value "10010(0x12)" of the latch 46 in the S2 stage 40 proceeds to the latch 47 in the T1 stage 41 as it is. The instruction C occurs in the instruction feeding portion 20 and is decoded by the instruction decoding portion 21. A value of DECODE which is the information 3 on the instruction C becomes "101(0x5)", and a value "10100(0x14)" of J1SEQ is generated by the initial information generating portion 22 according to the value of DECODE and the status of the both instruction pipelines.

In the latter half of the (m + 2)th cycle, A1SEL is 1 and B1SEL is 2. Consequently, the instruction A remains in the B2 stage 32 and C1 stage 33 of the first instruction pipeline 10. In addition, the instruction C proceeds to the A2 stage 30 of the first instruction pipeline 10 according to the decoded information, and a value "10100(0x14)" of J1SEQ generated by the initial information generating portion 22 proceeds to the latch 36 in the A2 stage 30. At the same time, S1SEL is 0 and T1SEL is 1. Consequently, the instruction B proceeds to the T2 stage 42 of the second instruction pipeline 11. A value "10010(0x12)" of the latch 47 in the T1 stage 41 proceeds to the latch 48 in the T2 stage 42 as it is, the NOP instruction proceeds to the S2 stage 40 of the second instruction pipeline 11, and the value "0" proceeds to the latch 46 in the S2 stage 40. Thus, even if the instruction A remains in the B2 stage 32 and C1 stage 33 for a long time in view of circumstances, the instructions B and C proceed independently.

In the former half of the (m + 3)th cycle, the instruction A remains in the B2 stage 32 and C1 stage 33 of the first instruction pipeline 10, the instruction B proceeds from the T2 stage 42 to the U1 stage 43 of the second instruction pipeline 11, the value "10010(0x12)" of the latch 48 in the T2 stage 42 proceeds to the latch 49 in the U1 stage 43 as it is, the instruction C proceeds from the A2 stage 30 to the B1 stage 31 of the first instruction pipeline 10, and the value "10100(0x14)" of the latch 36 in the A2 stage 30 proceeds to the latch 37 in the B1 stage 31 as it is. The instruction D occurs in the instruction feeding portion 20 and is decoded by the instruction decoding portion 21. Consequently, a value of DECODE which is the information 3 on the instruction D becomes "010(0x2)". At the same time, a value "01000(0x08)" of J1SEQ is generated by the initial information generating portion 22 according to the value of DECODE and the status of the both instruction pipelines.

In the latter half of the (m + 3)th cycle, A1SEL is 2 and B1SEL is 2. Consequently, the instructions A and C remain in the B2 and C1 stages 32 and 33 and the A2 and B1 stages 30 and 31 of the first instruction pipeline 10, respectively. At this time, S1SEL is 1 and T1SEL is 2. Consequently, the instruction B remains in the T2 stage 42 and U1 stage 43 of the second instruction pipeline 11, the instruction D proceeds to the S2 stage 40 of the second instruction pipeline 11 according to the decoded information, and the value "01000(0x08)" of J1SEQ generated by the initial information generating portion 22 proceeds to the latch 46 in the S2 stage 40.

In the former half of the (m + 4)th cycle, the instruction A remains in the B2 stage 32 and C1 stage 33 of the first instruction pipeline 10, the instruction B remains in the T2 stage 42 and U1 stage 43 of the second instruction pipeline 11, and the instruction C remains in the A2 stage 30 and B1 stage 31 of the first instruction pipeline 10. At this time, the instruction D proceeds to the S2 stage 40 and T1 stage 41 of the second instruction pipeline 11, and the value "01000(0x08)" of the latch 46 in the S2 stage 40 proceeds to the latch 47 in the T1 stage 41 as it is. The instruction E occurs in the instruction feeding portion 20 and is decoded by the instruction decoding portion 21. Consequently, a value of DECODE which is the information 3 on the instruction E becomes "110(0x6)". In addition, a value "11000(0x18)" of J1SEQ is generated by the initial information generating portion 22 according to the value of DECODE and the status of the both instruction pipelines. At this cycle, S1SEL is 2 and the instruction E cannot proceed to the second instruction pipeline 11. Consequently, the initial information generating portion 22 requires the instruction feeding portion 20 to temporarily stop instruction feeding (SINST is "1").

In the latter half of the (m + 4)th cycle, A1SEL is 0, B1SEL is 1 and C1SEL is 1. Consequently, the instruction A is processed in the instruction pipelines 10 and 11 according to the value "10001(0x11)" of the latch 39 in the C1 stage 33. Since the instruction A has not proceeded to the synchronous stage and is firstly fed from the instruction feeding portion 20, it proceeds to the C2 stage 34. At the same time, the instruction C proceeds to the B2 stage 32 of the first instruction pipeline 10. In addition, the value "10100(0x14)" of the latch 37 in the B1 stage 31 is updated to a value "10010(0x12)" by the flag on flag generating circuit 81 and then proceeds to the latch 38 in the B2 stage 32. This indicates that the instruction C is a second one which is processed in the instruction pipelines 10 and 11, has not proceeded to the synchronous stage and is fed from the instruction feeding portion 20. The NOP instruction proceeds to the A2 stage 30 of the first instruction pipeline 10, and the value "0" proceeds to the latch 36 in the A2 stage 30. The instruction A which has proceeded to the C2 stage 34 subsequently and independently proceeds in the first instruction pipeline 10 so as to terminate processing. Since S1SEL is 2 and T1SEL is 2, the instructions B and D remain in the T2 stage 42 and U1 stage 43 of the second instruction pipeline 11 and the S2 stage 40 and T1 stage 41 of the second instruction pipeline 11, respectively. Since the instruction A proceeds to the C2 stage 34 of the first instruction pipeline 10, a value of the latch 48 in the T2 stage 42 is set to "10001(0x11)" by the flag generating circuit 83 and a value of the latch 46 in the S2 stage 40 is set to "00100(0x04)" by the flag generating circuit 82. This indicates that the instructions B and D are first and third ones which are processed in the instruction pipelines 10 and 11, have not proceeded to the synchronous stage and are fed from the instruction feeding portion 20. At this cycle, processing has been terminated in the T1 stage 41. As apparent from the value "01000(0x08)" of the latch 47 in the T1 stage 41, it is not necessary to synchronize the instruction D with the preceding and succeeding instructions. However, since the instruction B remains in the T2 stage 42 and U1 stage 43, the instruction D remains in the S2 stage 40 and T1 stage 41. Assuming that the instruction B does not exist before the instruction D in the second instruction pipeline 11, the instruction D which is an asynchronous instruction independently proceeds in the second instruction pipeline 11.

In the former half of the (m + 5)th cycle, the instruction A proceeds to the D1 stage 35 of the first instruction pipeline 10. At the same time, the instruction C proceeds to the C1 stage 33 of the first instruction pipeline 10, and a value "10010(0x12)" of the latch 38 in the B2 stage 32 proceeds to the latch 39 in the C1 stage 33 as it is. In the second instruction pipeline 11, the instructions B and D remain in the T2 stage 42 and U1 stage 43 and the S2 stage 40 and T1 stage 41, respectively. The value "10001(0x11)" of the latch 48 in the T2 stage 42 proceeds to the latch 49 in the U1 stage 43 as it is, and the value "00100(0x04)" of the latch 46 in the S2 stage 40 proceeds to the latch 47 in the T1 stage 41 as it is. Also at this cycle, since S1SEL which is a part of the second instruction pipeline control signal 26 is 2 and the instruction E cannot proceed to the second instruction pipeline 11, the instruction E remains in the instruction feeding portion 20 as it is.

In the latter half of the (m + 5)th cycle, A1SEL is 0, B1SEL is 2, and C1SEL is 0. Consequently, the instruction A terminates processing at this cycle and then goes out of the first instruction pipeline 10, the NOP instruction proceeds to the C2 stage 34 of the first instruction pipeline 10, and the instruction C remains in the B2 stage 32 and C1 stage 33 of the first instruction pipeline 10. At the same time, S1SEL is 2 and T1SEL is 2. Consequently, the instructions B and D remain in the T2 stage 42 and U1 stage 43 of the second instruction pipeline 11 and the S2 stage 40 and T1 stage 41 of the second instruction pipeline 11, respectively. At this cycle, the instruction C terminates processing in the C1 stage 33 of the first instruction pipeline 10 and then proceeds to the C2 stage 34. However, since a value of the latch 39 in the C1 stage 33 is "10010(0x12)" and C1SEL which is a part of the first instruction pipeline control signal 25 is 0, it is decided that it is necessary to synchronize the instruction C with an instruction which is earlier fed from the instruction feeding portion 20, i.e., the instruction B. Consequently, the instruction C remains in the B2 stage 32 and C1 stage 33 of the first instruction pipeline 10 until synchronization is ensured.

In the former half of the (m + 6)th cycle, the instruction B remains in the T2 stage 42 and U1 stage 43 of the second instruction pipeline 11, the instruction C remains in the B2 stage 32 and C1 stage 33 of the first instruction pipeline 10, and the instruction D remains in the S2 stage 40 and T1 stage 41 of the second instruction pipeline 11. At this time, C1SEL which is a part of the first instruction pipeline control signal 25 is 1, and U1SEL which is a part of the second instruction pipeline control signal 26 is 1 as will be described below. Consequently, a value of J1SEQ in the instruction E which remains in the instruction feeding portion 20 becomes "10010(0x12)" in the initial information generating portion 22. In addition, since S1SEL which is a part of the second instruction pipeline control signal 26 is 1, a feeding stop request SINST sent from the initial information generating portion 22 to the instruction feeding portion 20 is set to "0".

In the latter half of the (m + 6)th cycle, A1SEL is 0, B1SEL is 0 and C1SEL is 1, which are the first instruction pipeline control signals 25. S1SEL is 1, T1SEL is 1 and U1SEL is 1, which are the second instruction pipeline control signals 26. According to the value "10001(0x11)" of the latch 49 in the U1 stage 43, the instruction B is a first one which is processed in the instruction pipelines 10 and 11, has not proceeded to the synchronous stage, and is fed from the instruction feeding portion 20. As a result, the instruction B proceeds to the U2 stage 44 of the second instruction pipeline 11. In addition, the instruction C which has remained in the B2 stage 32 and C1 stage 33 of the first instruction pipeline 10 can be synchronized with the instruction B (the instruction C is fed from the instruction feeding portion 20 following the instruction B) so that it proceeds to the C2 stage 34 of the first instruction pipeline 10. Thus, the instruction D proceeds to the T2 stage 42 of the second instruction pipeline 11 in parallel with the simultaneous progress of the instructions B and C. In addition, the value "00100(0x04)" of the latch 47 in the T1 stage 41 is updated by 2 rankings by means of the flag generating circuit 83 so that it is set to "00001(0x01)". The value "00001(0x01)" proceeds to the latch 48 in the T2 stage 42, the instruction E proceeds to the S2 stage 40 of the second instruction pipeline 11 according to the decoded information, and the value "10010(0x12)" of J1SEQ generated by the initial information generating portion 22 proceeds to the latch 46 in the S2 stage 40. This indicates that the instructions B and C are simultaneously processed in the instruction pipelines 10 and 11, the instructions D and E are first and second ones which have not proceeded to the synchronous stage and are fed from the instruction feeding portion 20. The NOP instruction proceeds to the B2 stage 32 of the first instruction pipeline 10 and the value "0" proceeds to the latch 38 in the B2 stage 32. The instruction B which has proceeded to the U2 stage 44 and the instruction C which has proceeded to the C2 stage 34 subsequently and independently proceed in the second and first instruction pipelines 11 and 10, respectively. Thus, processing is terminated.

In the former half of the (m + 7)th cycle, the instruction B proceeds to the V1 stage 45 of the second instruction pipeline 11, the instruction C proceeds to the D1 stage 35 of the first instruction pipeline 10, and the instruction D proceeds to the T2 stage 42 and U1 stage 43 of the second instruction pipeline 11. In addition, the value "00001(0x01)" of the latch 48 in the T2 stage 42 proceeds to the latch 49 in the U1 stage 43 as it is, the instruction E proceeds to the S2 stage 40 and T1 stage 41 of the second instruction pipeline 11, and the value "10010(0x12)" of the latch 46 in the S2 stage 40 proceeds to the latch 47 in the T1 stage 41 as it is.

In the latter half of the (m + 7)th cycle, A1SEL is 0, B1SEL is 0 and C1SEL is 0, which are the first instruction pipeline control signals 25. In addition, S1SEL is 0, T1SEL is 1 and U1SEL is 1, which are the second instruction pipeline control signals 26. Consequently, the instruction B terminates processing at this cycle and goes out of the second instruction pipeline 11, the instruction C terminates processing at this cycle and goes out of the first instruction pipeline 10, and the NOP instruction correspondingly proceeds to the C2 stage 34 of the first instruction pipeline 10. At this time, the instruction D terminates processing in the U1 stage 43 of the second instruction pipeline 11 and proceeds to the U2 stage 44 according to the value "00001(0x01)" of the latch 49 in the U1 stage 43. The instruction E proceeds to the T2 stage 42 of the second instruction pipeline 11. The value "10010(0x12)" of the latch 47 in the T1 stage 41 is updated to a value "10001(0x11)" by the flag generating circuit 83 and proceeds to the latch 48 in the T2 stage 42. The NOP instruction proceeds to the S2 stage 40 of the second instruction pipeline 11. The value "0" proceeds to the latch 46 in the S2 stage 40. The instruction C terminates processing at this cycle and goes out of the first instruction pipeline 10. In the subsequent cycles, consequently, there are no effective instructions which are executed in the first instruction pipeline 10.

In the former half of the (m + 8)th cycle, the instruction D proceeds to the V1 stage 45 of the second instruction pipeline 11, the instruction E proceeds to the T2 stage 42 and U1 stage 43 of the second instruction pipeline 11, and the value "10001(0x11)" of the latch 48 in the T2 stage 42 proceeds to the latch 49 in the U1 stage 43 as it is.

In the latter half of the (m + 8)th cycle, S1SEL is 0, T1SEL is 0 and U1SEL is 1, which are the second instruction pipeline control signals 26. Consequently, the instruction D terminates processing at this cycle and goes out of the second instruction pipeline 11. In addition, the instruction E terminates processing in the U1 stage 43 of the second instruction pipeline 11 and proceeds to the U2 stage 44 according to the value "10001(0x11)" of the latch 49 in the U1 stage 43. The NOP instruction proceeds to the T2 stage 42 of the second instruction pipeline 11. The value "0" proceeds to the latch 48 in the T2 stage 42.

In the former half of the (m + 9)th cycle, the instruction E proceeds to the V1 stage 45 of the second instruction pipeline 11. In the latter half of the (m + 9)th cycle, the instruction E terminates processing at this cycle and goes out of the second instruction pipeline 11. Consequently, there are no effective instructions which are executed in the first and second instruction pipelines 10 and 11.

Thus, the instruction 1 fed from the instruction feeding portion 20 is decoded. When the instruction 2 obtained by decoding proceeds to the first instruction pipeline 10 or the second instruction pipeline 11, information fed from the initial information generating portion 22 is added to the instruction itself according to the information 3 on the decoded instruction and the status of the instructions processed in the instruction pipelines. The information fed from the initial information generating portion 22 is related to the necessity of synchronizing an instruction pipeline for executing the instruction with other instruction pipelines, and the numbers of the instructions which are processed in both instruction pipelines and have not reached the synchronous stages of the both instruction pipelines (in case of the present embodiment, the C2 stage 34 of the first instruction pipeline 10 and the U2 stage 44 of the second instruction pipeline 11). Values of the latches 36 to 39 provided in the first instruction pipeline 10 or the latches 46 to 49 provided in the second instruction pipeline 11 are determined according to the progress of instructions which are earlier fed to the instruction pipelines 10 and 11. On the basis of the values of the latches, the progress of instructions in the instruction pipelines is controlled so that synchronization can be ensured between the first and second instruction pipelines 10 and 11.

According to the above-mentioned embodiments, the first and second instruction pipelines 10 and 11 are comprised of 3-pipeline stages, and the synchronization can be ensured between the third stage (C2 stage 34) of the first instruction pipeline 10 and the third stage (U2 stage 44) of the second instruction pipeline 11. The synchronization can be ensured in the same manner by combining other stages, for example, by combining the second stage (B2 stage 32) of the first instruction pipeline 10 with the third stage (U2 stage 44) of the second instruction pipeline 11, and the second stage (B2 stage 32) of the first instruction pipeline 10 with the second stage (T2 stage 42) of the second instruction pipeline 11. In general, in the case where the first and second instruction pipelines are formed by n and m pipeline stages, the synchronization can be ensured in the same manner in the ith (≦n) stage of the first instruction pipeline and the jth (≦m) stage of the second instruction pipeline. If the respective instructions are identified, it is possible to change the combination of stages which perform synchronization for each kind of instructions.

According to the present embodiment, the respective substages are driven by 2-phase clocks. A pipeline stage is formed by two substages. Similarly, the synchronization can be realized in a pipelined computer which has no substages and is driven by a single-phase clock, or a pipelined computer which is driven by a multiphase clock and in which a pipeline stage is formed by 3 or more substages.

A counter circuit for outputting numbers which indicate the order of feeding instructions and a latch for temporarily holding counted values can be adopted in place of the flag generating circuit and information holding latch according to the present embodiment. The means for holding the order of feeding instructions to instruction pipelines and the necessity of synchronization are not limited to the above-mentioned embodiments.

### (Fourth Embodiment)

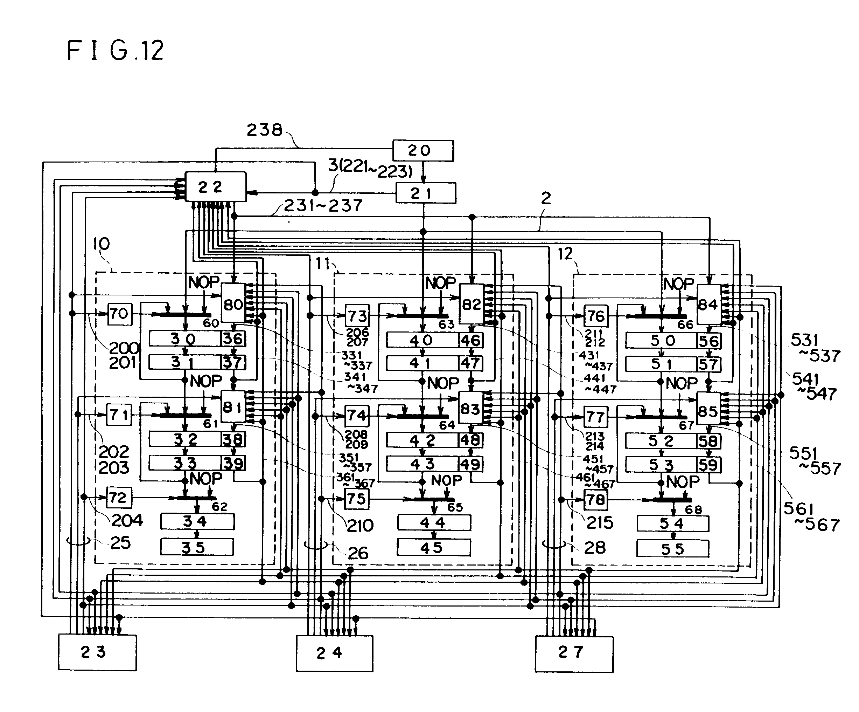

Of course, a synchronizing method can be realized in a computer having three or more instruction pipelines in similar to the foregoing. With reference to Figs. 12 to 15, there will be described a pipelined computer having three instruction pipelines.

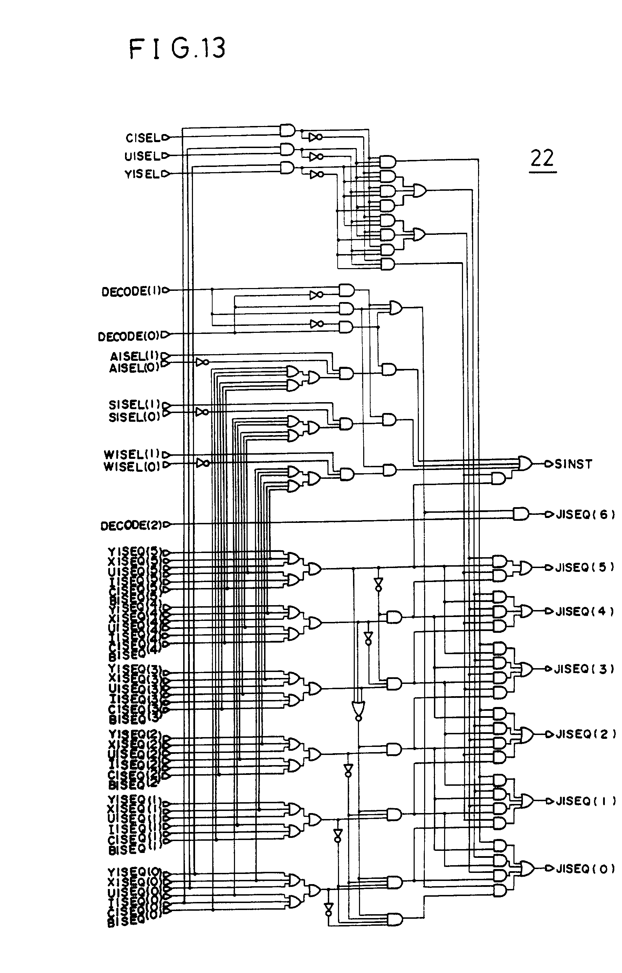

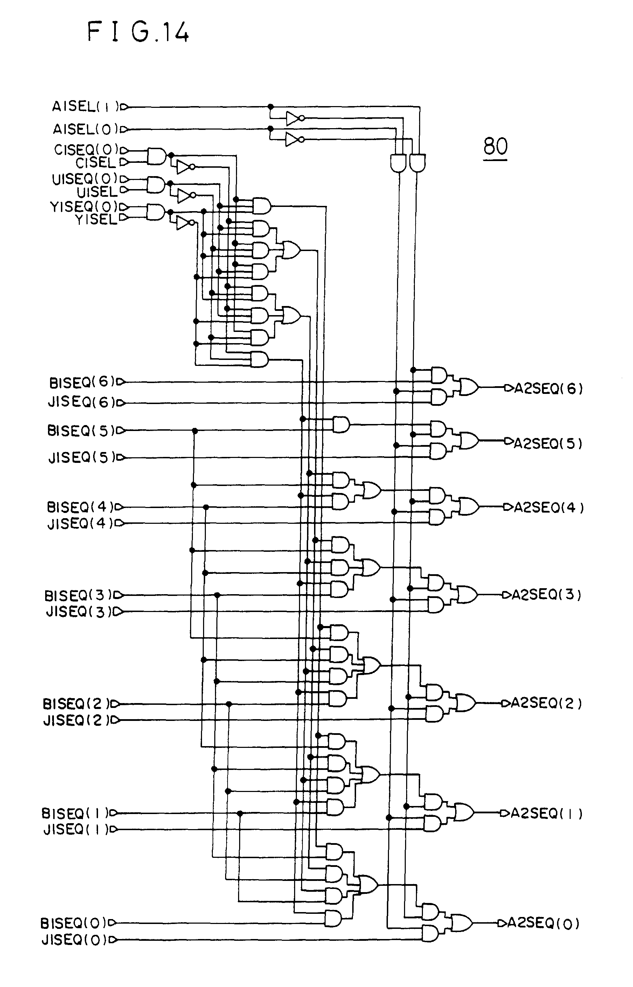

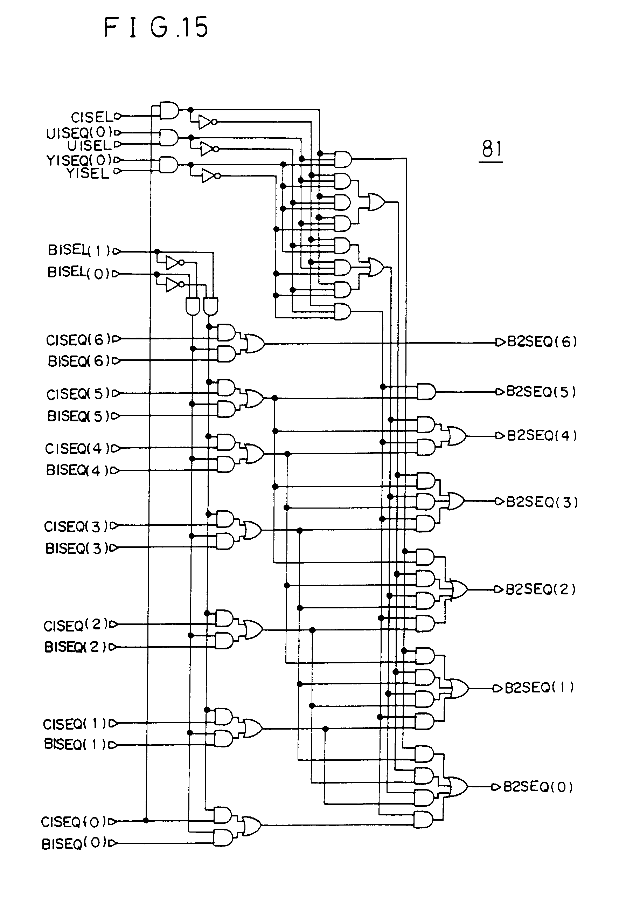

A pipelined computer shown in Fig. 12 comprises a third instruction pipeline 12 and a third instruction pipeline control portion 27 in addition to first and second instruction pipelines 10 and 11, and first and second instruction pipeline control portions 23 and 24. The third instruction pipeline 12 has the same structure as those of the first and second instruction pipelines 10 and 11 comprised of 3 pipeline stages, and includes first, second and third stages. The first stage has W2 and X1 stages 50 and 51. The second stage has X2 and Y1 stages 52 and 53. The third stage has Y2 and Z1 stages 54 and 55. The third instruction pipeline 12 includes flag generating circuits 84 and 85. In addition, information holding latches 56 to 59 are provided in the W2 stage 50 to the Y1 stage 53 in order to ensure the synchronization of instruction execution in the third stage (Y2 stage 54) in similar to the first and second instruction pipelines 10 and 11. Input selectors 66 to 68 are controlled by signals generated by logical circuits 76 to 78. The input selectors 66 to 68 and logical circuits 76 to 78 have the same structures as those of input selectors 60 to 62 and logical circuits 70 to 72 of the first instruction pipeline 10 (or input selectors 63 to 65 and logical circuits 73 to 75 of the second instruction pipeline 11), and have the same circuit structures as in the third embodiment of the present invention. The flag generating circuits 84 and 85 have the same structures as those of flag generating circuits 80 and 81 of the first instruction pipeline 10 (or flag generating circuits 82 and 83 of the second instruction pipeline 11), but have circuit structures different from those of the third embodiment. In addition, an initial information generating portion 22 has a circuit structure different from that of the third embodiment. Fig. 13 shows a circuit diagram showing the initial information generating portion 22 according to the present embodiment. Fig. 14 is a circuit diagram showing the flag generating circuit 80 for an A2 stage 30 according to the present embodiment (the flag generating circuits 82 and 84 have the same structures). Fig. 15 is a circuit diagram showing the flag generating circuit 81 for a B2 stage 32 (the flag generating circuits 83 and 85 have the same structures).

According to the third embodiment of the present invention, the 5-bit information holding latches form means for temporarily holding information which are provided from the A2 stage 30 to the C1 stage 33 of the first instruction pipeline 10 and from the S2 stage 40 to the U1 stage 43 of the second instruction pipeline 11. According to the present embodiment, there are three instruction pipelines so that the information holding means are formed by 7-bit information holding latches as shown in Figs. 13 to 15. The information holding means are provided from the A2 stage 30 to the C1 stage 33 of the first instruction pipeline 10, from the S2 stage 40 to the U1 stage 43 of the second instruction pipeline 11, and from the W2 stage 50 to the Y1 stage 53 of the third instruction pipeline 12.

In similar to the third embodiment, information 3 decoded by an instruction decoding portion 21 has three bits (DECODE [2] to DECODE [0]) which have the same meaning. In the case where the decoded instruction should be processed in the third instruction pipeline 12, values of low order 2 bits DECODE [1] and DECODE [0] of the information 3 are set to "11(0x3)".

Seven bit information J1SEQs are generated by the initial information generating portion 22. A most significant bit J1SEQ [6] indicates the necessity of synchronizing an instruction pipeline for processing instructions with other instruction pipelines. If the bit is "1", synchronization is needed. If the bit is "0", the synchronization is not needed. Low order 6 bits of J1SEQ [5] to J1SEQ [0] indicate the order of feeding from the instruction feeding portion 20 instructions which are processed in the instruction pipelines 10 to 12. The values are, in the feeding order, "000001(0x01)", "000010(0x02)", "000100(0x04)", "001000(0x08)", "010000(0x10)" and "100000(0x20)".

In general, in the case where the first, second and third instruction pipelines are formed by n, m and k pipeline stages, the synchronization can be ensured in the same manner in the ith (≦n) stage of the first instruction pipeline, the jth (≦m) stage of the second instruction pipeline, and the xth (≦k) stage of the third instruction pipeline. If the respective instructions are identified, it is possible to change the combination of stages for performing the synchronization for each kind of instructions.

## Claims

1. A method for synchronizing the progress of instructions in a plurality of instruction pipelines each of which has a plurality of stages for processing the instructions, wherein one stage of each one of the plurality of stages in each instruction pipeline is specified as a synchronous stage, comprising the steps of;
sequentially feeding an instruction accompanied by order information on a number which is obtained by adding 1 to the number of all the instructions which have not proceeded to the synchronous stages in all said instruction pipelines to an instruction pipeline which is successively selected from said instruction pipelines according to the kind of the instruction,
causing any instruction in said instruction pipelines to sequentially proceed together with the order information to the next stage independently of the progress of all other instructions in said instruction pipelines except the cases where the progress of a succeeding instruction in any of said instruction pipelines is stopped when it is decided that the succeeding instruction is about to proceed to a stage occupied by a preceding instruction in the same instruction pipeline before the preceding instruction proceeds from the occupied stage to the next stage, and where the progress of a succeeding instruction in any of said instruction pipelines is stopped when it is decided that the succeeding instruction is about to proceed to the synchronous stage thereof before a preceding instruction in any other instruction pipeline proceeds to the synchronous stage thereof, and
every time any instruction in said instruction pipelines proceeds to the synchronous stage thereof updating all the order information which proceeds together with all other instructions in said instruction pipelines so as to substract 1 from each number corresponding to said order information.

2. A method as set forth in claim 1, in which said instruction accompanied by order information on a number which is obtained by adding 1 to the number of instructions which have not proceeded to the synchronous stages in said instruction pipelines is also accompanied by an identification code for distinguishing a synchronous instruction which needs synchronization from an asynchronous instruction which does not need the synchronization, and wherein, when said instruction in said instruction pipelines sequentially proceeds to the next stage said identification code proceeds together.

3. A pipelined computer comprising;
a plurality of instruction pipelines (10, 11) each of which has a plurality of stages (30-35; 40-45) for processing instructions, wherein one stage of each one of the plurality of stages in each instruction pipeline is specified as a synchronous stage (34;44),
an instruction feeding portion (20) for sequentially feeding instructions to be processed,
an instruction decoding portion (21) for successively selecting an instruction pipeline from said instruction pipelines (10, 11) according to the kind of an instruction fed from said instruction feeding portion (20) and sending the instruction fed from said instruction feeding portion (20) to the selected instruction pipeline,
an instruction pipeline control portion (23; 24) for controlling the progress of instructions in said instruction pipelines (10,11),
an initial information generating portion (22) for generating order information on a number which is obtained by adding 1 to the number of all the instructions which have not proceeded to the synchronous stages (34; 44) in all said instruction pipelines (10, 11), and
an information holding portion provided with latches (41, 43, 45) for receiving the order information correspondingly sent from said initial information generating portion (22) every time an instruction is fed from said instruction decoding portion (21) to any of said instruction pipelines (10, 11), each one of the latches (41, 43, 45) sending the order information to another,
wherein said instruction pipeline control portion (22) has functions of causing any instruction in said instruction pipelines (10, 11) to sequentially proceed together with the order information in said information holding portion to the next stage independently of the progress of all other instructions in said instruction pipelines (10, 11) except the cases where the progress of a succeeding instruction in any of said instruction pipelines (10, 11) is stopped when it is detected that the succeeding instruction is about to proceed to a stage occupied by a preceding instruction in the same instruction pipeline before the preceding instruction proceeds from the occupied stage to the next stage, and where the progress of a succeeding instruction in any of said instruction pipelines (10, 11) is stopped when it is detected that the succeeding instruction is about to proceed to the synchronous stage (34; 44) thereof before a preceding instruction in any other instruction pipelines (10, 11) proceeds to the synchronous stage thereof (34; 44), and
every time any instruction in said instruction pipelines (10, 11) proceeds to the synchronous stage (34; 44) thereof updating all the order information in said information holding portion which proceeds together with all other instructions in said instruction pipelines (10, 11) so as to substract 1 from each number corresponding to said order information.

4. A pipelined computer as set forth in claim 3, wherein
said initial information generating portion (22) also generates an identification code for distinguishing a synchronous instruction which needs synchronization from an asynchronous instruction which does not need the synchronization,
and wherein said information holding portion receives the order information together with said identification code, each of its latches (41, 43, 45) sending the order information and the identification code to another, and
wherein the functions of said instruction pipeline control portion (23; 24) cause also the identification code to sequentially proceed together with the order information in said information holding portion to the next stage.

## Patentansprüche

1. Verfahren zum Synchronisieren des Fortschrittes von Befehlen in einer Vielzahl von Befehlspipelines, von denen jede eine Vielzahl von Stufen zum Verarbeiten der Befehle umfaßt, wobei eine Stufe aus der Vielzahl von Stufen in jeder Befehlspipeline als eine synchrone Stufe spezifiziert ist, wobei das Verfahren folgende Schritte umfaßt:
sequentielles Eingeben eines Befehls, der von einer Reihenfolgeninformation mit einer Zahl begleitet wird, die durch das Addieren von 1 zu der Anzahl aller nicht zu den synchronen Stufen in allen Befehlspipelines fortgeschrittenen Befehle erhalten wird, in eine Befehlspipeline, die sukzessive aus den Befehlspipelines in Übereinstimmung mit der Art des Befehls ausgewählt wird,
wobei veranlaßt wird, daß jeder Befehl in den Befehlspipelines sequentiell zusammen mit der Reihenfolgeninformation unabhängig von dem Fortschritt aller anderen Befehle in den Befehlspipelines zu der nächsten Stufe fortschreitet, außer in den Fällen, in denen der Fortschritt eines folgenden Befehls in einer der Befehlspipelines gestoppt wird, wenn entschieden wird, daß der folgende Befehl dabei ist, zu einer durch einen vorhergehenden Befehl in derselben Befehlspipeline eingenommenen Stufe fortzuschreiten, bevor der vorhergehende Befehl von der eingenommenen Stufe zu der nächsten Stufe fortschreitet, und in den Fällen, in denen der Fortschritt eines folgenden Befehls in einer der Befehlspipelines gestoppt wird, wenn entschieden wird, daß der folgende Befehl dabei ist, zu der synchronen Stufe fortzuschreiten, bevor ein vorhergehender Befehl in einer der anderen Befehlspipelines zu der synchronen Stufe derselben fortschreitet, und
wobei jedesmal, wenn ein Befehl in den Befehlspipelines zu der synchronen Stufe fortschreitet, alle Reihenfolgeninformationen, die zusammen mit allen anderen Befehlen in den Befehlspipelines fortschreiten, aktualisiert werden, um 1 von der Zahlen in jeder der Reihenfolgeninformationen zu subtrahieren.

2. Verfahren nach Anspruch 1, wobei der Befehl, der von einer Reihenfolgeninformation mit einer Zahl begleitet wird, die durch das Addieren von 1 zu der Anzahl aller nicht zu den synchronen Stufen in allen Befehlspipelines fortgeschrittenen Befehle erhalten wird, auch durch einen Identifikationscode zum Unterscheiden eines synchronen Befehls, der eine Synchronisierung erfordert, von einem asynchronen Befehl, der keine Synchronisierung erfordert, begleitet wird, wobei der Identifikationscode zusammen mit dem Befehl fortschreitet, wenn der Befehl in den Befehlspipelines sequentiell zu der nächsten Stufe fortschreitet.

3. Pipelinecomputer mit:
einer Vielzahl von Befehlspipelines (10, 11), die jeweils eine Vielzahl von Stufen (30-35; 40-45) zum Verarbeiten von Befehlen aufweisen, wobei jeweils eine Stufe in der Vielzahl von Stufen in jeder Befehlspipeline als synchrone Stufe (34, 44) spezifiziert ist,
einem Befehlseingabeteil (20) zum sequentiellen Eingeben von zu verarbeitenden Befehlen,
einem Befehlsdecodierungsteil (21) zum sukzessiven Auswählen einer Befehlspipeline aus den Befehlspipelines (10, 11) in Übereinstimmung mit der Art des aus dem Befehlseingabeteil (20) eingegebenen Befehls und zum Senden des aus dem Befehlseingabeteil (20) eingegebenen Befehls an die ausgewählte Befehlspipeline,
einem Befehlspipeline-Steuerteil (23, 24) zum Steuern des Fortschrittes der Befehle in den Befehlspipelines (10, 11),
einem Anfangsinformationserzeugungsteil (22) zum Erzeugen von Reihenfolgeninformation mit einer Zahl, die durch das Addieren von 1 zu der Anzahl aller nicht zu den synchronen Stufen (34; 44) fortgeschrittenen Befehle in den Befehlspipelines (10, 11) erhalten wird, und
einem Informationsspeicherteil mit Zwischenspeichern (41, 43, 45) zum Empfangen der Reihenfolgeninformation, die entsprechend jedesmal aus dem Anfangsinformationserzeugungsteil (22) gesendet wird, wenn ein Befehl aus dem Befehlsdecodierungsteil (21) in eine der Befehlspipelines (10, 11) eingegeben wird, wobei jeder der Zwischenspeicher (41, 43, 45) die Reihenfolgeninformation zu einem anderen sendet,
wobei der Befehlspipeline-Steuerteil (22) Funktionen aufweist, um zu veranlassen, daß jeder Befehl in den Befehlspipelines (10, 11) zusammen mit der Reihenfolgeninformation in dem Informationsspeicherteil unabhängig von dem Fortschritt aller anderen Befehle in den Befehlspipelines (10, 11) fortschreitet, außer in den Fällen, in denen der Fortschritt eines folgenden Befehls in einer der Befehlspipelines (10, 11) gestoppt wird, wenn festgestellt wird, daß der folgende Befehl dabei ist, zu einer durch einen vorhergehenden Befehl in derselben Befehlspipeline eingenommenen Stufe fortzuschreiten, bevor der vorhergehende Befehl von der eingenommenen Stufe zu der nächsten Stufe fortschreitet, und in den Fällen, in denen der Fortschritt eines folgenden Befehls in einer der Befehlspipelines (10, 11) gestoppt wird, wenn festgestellt wird, daß der folgende Befehl dabei ist, zu der synchronen Stufe fortzuschreiten, bevor ein vorhergehender Befehl in einer der anderen Befehlspipelines (10, 11) zu der synchronen Stufe (34; 44) fortschreitet, und
wobei jedesmal, wenn ein Befehl in den Befehlspipelines (10, 11) zu der synchronen Stufe fortschreitet (34; 44), alle Reihenfolgeninformationen in dem Informationsspeicherteil, die zusammen mit allen anderen Befehlen in den Befehlspipelines (10, 11) fortschreiten, aktualisiert werden, so daß 1 von der Zahl in jeder der Reihenfolgeninformationen subtrahiert wird.

4. Pipelinecomputer nach Anspruch 3, wobei der Anfangsinformationserzeugungsteil (22) auch einen Identifikationscode erzeugt, um einen synchronen Befehl, der eine Synchronisierung erfordert, von einem asynchronen Befehl, der keine Synchronisierung erfordert, zu unterscheiden,
wobei der Informationsspeicherteil die Reihenfolgeninformation zusammen mit dem Identifikationscode empfängt, wobei jeder der Zwischenspeicher (41, 43, 45) die Reihenfolgeninformation und den Identifikationscode zu einem anderen sendet, und
wobei die Funktionen des Befehlspipeline-Steuerteils (23;24) auch veranlassen, daß der Identifkationscode sequentiell zusammen mit der Reihenfolgeninformation in dem Informationsspeicherteil zu der nächsten Stufe fortschreitet.

## Revendications

1. Procédé destiné à la synchronisation de la progression des instructions dans une pluralité de pipelines d'instructions dont chacun comporte une pluralité d'étages destinés à traiter les instructions, dans lequel un étage parmi chacun de la pluralité des étages dans chaque pipeline d'instructions est spécifié en tant qu'étage synchrone, comprenant les étapes consistant à :
appliquer séquentiellement une instruction accompagnée d'informations d'ordre concernant un numéro qui est obtenu en additionnant 1 au nombre de toutes les instructions qui n'ont pas progressé vers les étages synchrones dans la totalité desdits pipelines d'instructions, à un pipeline d'instructions qui est sélectionné successivement à partir desdits pipelines d'instructions conformément au type de l'instruction,
amener toute instruction quelconque dans lesdits pipelines d'instructions à progresser séquentiellement en même temps que les informations d'ordre vers l'étage suivant, indépendamment de la progression de toutes les autres instructions dans lesdits pipelines d'instructions, à l'exception des cas où la progression d'une instruction suivante dans l'un quelconque desdits pipelines d'instructions est arrêtée lorsqu'il est défini que l'instruction suivante est sur le point de progresser vers un étage occupé par une instruction précédente dans le même pipeline d'instructions avant que l'instruction précédente ne progresse depuis l'étage occupé vers l'étage suivant, et où la progression d'une instruction suivante dans l'un quelconque desdits pipelines d'instructions est arrêtée lorsqu'il est défini que l'instruction suivante est sur le point de progresser vers l'étage synchrone de celui-ci avant qu'une instruction précédente dans l'un quelconque des autres pipelines d'instructions ne progresse vers l'étage synchrone de celui-ci, et
à chaque fois qu'une instruction quelconque dans lesdits pipelines d'instructions progresse vers l'étage synchrone de celui-ci, mettre à jour toutes les informations d'ordre qui progressent en même temps que toutes les autres instructions dans lesdits pipelines d'instructions de façon à soustraire 1 de chaque numéro correspondant auxdites informations d'ordre.

2. Procédé selon la revendication 1, dans lequel ladite instruction accompagnée des informations d'ordre concernant un numéro qui est obtenu en additionnant 1 au nombre des instructions qui n'ont pas progressé vers les étages synchrones dans lesdits pipelines d'instructions, est également accompagnée d'un code d'identification destiné à distinguer une instruction synchrone qui nécessite une synchronisation d'une instruction asynchrone qui ne nécessite pas la synchronisation, et dans lequel, lorsque ladite instruction dans lesdits pipelines d'instructions progresse séquentiellement vers l'étage suivant ledit code d'identification progresse en même temps.

3. Ordinateur muni de pipelines comprenant :
une pluralité de pipelines d'instructions (10, 11) dont chacun comporte une pluralité d'étages (30 à 35, 40 à 45) destinés à traiter des instructions, dans lequel un étage parmi chacun de la pluralité des étages dans chaque pipeline d'instructions est spécifié en tant qu'étage synchrone (34 ; 44),
une partie d'application d'instruction (20) destinée à appliquer séquentiellement des instructions devant être traitées,
une partie de décodage d'instruction (21) destinée à sélectionner successivement un pipeline d'instructions à partir desdits pipelines d'instructions (10, 11) conformément au type d'une instruction appliquée depuis ladite partie d'application d'instruction (20) et à émettre l'instruction appliquée depuis ladite partie d'application d'instruction (20) vers le pipeline d'instructions sélectionné,
une partie de commande (23 ; 24) de pipelines d'instructions destinée à commander la progression des instructions dans lesdits pipelines d'instructions (10, 11),
une partie de génération d'informations initiales (22) destinée à générer des informations d'ordre concernant un numéro qui est obtenu en ajoutant 1 au nombre de toutes les instructions qui n'ont pas progressé vers les étages synchrones (34 ; 44) dans la totalité desdits pipelines d'instructions (10, 11), et
une partie de conservation d'informations munie de circuits à verrouillage (41, 43, 45) destinés à recevoir les informations d'ordre émises de façon correspondante depuis ladite partie de génération d'informations initiales (22) à chaque fois qu'une instruction est appliquée depuis ladite partie de décodage d'instruction (21), à l'un quelconque desdits pipelines d'instructions (10, 11), chacun des circuits à verrouillage (41, 43, 45) émettant les informations d'ordre vers un autre,
dans lequel ladite partie de commande (22) de pipelines d'instructions a pour fonction d'amener toute instruction quelconque dans lesdits pipelines d'instructions (10, 11) à progresser séquentiellement en même temps que les informations d'ordre dans ladite partie de conservation d'informations vers l'étage suivant, indépendamment de la progression de toutes les autres instructions dans lesdits pipelines d'instructions (10, 11) à l'exception des cas où la progression d'une instruction suivante dans l'un quelconque desdits pipelines d'instructions (10, 11) est arrêtée lorsque l'on détecte que l'instruction suivante est sur le point de progresser vers un étage occupé par une instruction précédente dans le même pipeline d'instructions avant que l'instruction précédente ne progresse depuis l'étage occupé vers l'étage suivant, et où la progression d'une instruction suivante dans l'un quelconque desdits pipelines d'instructions (10, 11) est arrêtée lorsque l'on détecte que l'instruction suivante est sur le point de progresser vers l'étage synchrone (34 ; 44) de celui-ci, avant qu'une instruction précédente dans l'un quelconque des autres pipelines d'instructions (10, 11) ne progresse vers l'étage synchrone de celui-ci (34 ; 44), et
à chaque fois qu'une instruction quelconque dans lesdits pipelines d'instructions (10, 11) progresse vers l'étage synchrone (34 ; 44) de celui-ci, mettre à jour toutes les informations d'ordre dans ladite partie de conservation d'informations qui progressent en même temps que toutes les autres instructions dans lesdits pipelines d'instructions (10, 11) de façon à soustraire 1 de chaque numéro correspondant auxdites informations d'ordre.

4. Ordinateur muni de pipelines selon la revendication 3, dans lequel ladite partie de génération d'informations initiales (22) génère également un code d'identification destiné à distinguer une instruction synchrone qui a besoin d'une synchronisation, d'une instruction asynchrone qui n'a pas besoin de la synchronisation,
et dans lequel ladite partie de conservation d'informations reçoit les informations d'ordre en même temps que ledit code d'identification, chacun de ses circuits à verrouillage (41, 43, 45) émettant les informations d'ordre et le code d'identification vers un autre, et
dans lequel les fonctions de ladite partie de commande (23 ; 24) de pipelines d'instructions amènent également le code d'identification à progresser séquentiellement en même temps que les informations d'ordre dans ladite partie de conservation d'informations vers l'étage suivant.
